# EUROPEAN PATENT SPECIFICATION

(11) **EP 1 303 363 B1**
(45) Date of publication and mention of the grant of the patent: **14.02.2007**
(21) Application number: 00928394.6
(22) Date of filing: 26.04.2000
(51) Int. Cl.: B07B 1/00

(54) **SIEVE BED FOR A SIFTING MACHINE**
SIEBBETT FÜR SIEBMASCHINE
TAMIS POUR CRIBLEUSE

(30) Priority: 26.04.1999 DE 19918824
(43) Date of publication of application: 23.04.2003
(73) Proprietor: Gummi Küper GmbH & Co. KG, 44308 Bochum (DE)
(72) Inventor: KÜPER, Roland, E., D-44791 Bochum (DE); SAWALL, Kirk, Luck, WI 54853 (US); DITLEFSON, David, Henry, Centuria, WI 54824 (US)
(74) Representative: Schneiders, Josef
(86) International application number: PCT/US2000/011162
(87) International publication number: WO 2000/064599

(56) References cited:
- EP-A- 0 167 999
- WO-A-90/05594
- DE-A1- 3 724 246
- US-A- 2 255 939
- US-A- 4 265 742
- US-A- 4 409 099
- US-A- 4 871 288
- US-A- 4 882 044
- US-A- 5 361 911
- US-A- 5 462 175
- US-A- 5 464 101
- US-A- 5 829 599

## Description

The invention pertains to an improved sieve bed for a sifting machine. More particularly, the invention relates to an improved mounting pin that allows for a maximum useful surface area for the sieve bed and which also securely mounts a plurality of sieve elements on a support frame of the sieve bed.

Various structures for screening or sifting particulate materials are known in the art. In general, a screening or sifting machine consists of a plurality of sieve elements (also referred to as screening panels and screen modules, among others) that are attached to a support frame with their edges abutting one another to create a contiguous sifting surface. Existing sifting machines can be loosely divided into those devices having sieve elements that are secured to an underlying support frame by means of projections which extend downwardly from the sieve elements themselves, and those devices which are secured to an underlying support frame by means of projections which extend upwardly from the support frame to mate with complementary cavities formed in the sieve elements.

Il is known that the mounting pins can be designed as integral parts of the sieve elements. In one case, half pins are molded onto the opposing edges of adjacent sieve elements: these half-pins are designed to work together to form a whole pin. The half-pins can be driven or snapped jointly into a mounting hole in the support frame. A sieve element such as this suffers from the disadvantage that the mounting pins must necessarily consist of the same material as the sieve elements; this can detract from the quality of the attachment if the sieve elements consist of a relatively soft material. In addition, it is also more difficult in particular to remove the sieve elements, because, each time the elements are removed, the relatively long half-pins must be pulled out of their mounting holes. Another disadvantage of the sieve bed of this type consists in that, after the sieve elements have become worn out, the mounting pins also must be replaced along with the sieve elements. They cannot therefore simply remain on the support frame.

A specific example of the former type of sieve bed is disclosed in U. S. Patent No. 5,938,042 to Freissle et al. The Freissle patent discloses a support frame made of up of a plurality of frame components in which a pair of complementary elongate members, each having a plurality of cavity defining formations, are secured to one another so as to form a unitary frame component having a plurality of cavities for receiving respective socket elements therein. When arranged side by side upon a sub-frame comprising a plurality of support beams, the frame components form a support frame to which a plurality of screening panels may be secured. Protrusions depending from the under surface of the screening panels are inserted into socket elements retained within the cavities of the respective frame components. Some of the disadvantages of this design include the fact that the frame components comprise too many constituent parts, require numerous and expensive manufacturing steps, require a higher degree of maintenance, and exert a hold down force upon the screening elements that is limited by the strength of the elastic material from which the protrusions depending from the undersurface of the screening panels are made.

A sieve bed of the latter type described above is known from, for example, DE-GM 78 11 183. In this known sieve bed, the mounting pins are driven from above into the receptacles formed by two adjacent sieve elements. The pins are thus able to pass into appropriately located mountingholes in the support frame and are then spread and tensioned by an expanding mandrel, which can be driven into the mounting pin.

This design of a sieve bed suffers from several disadvantages. A first significant disadvantage is that the receptacle for the mounting pin must be open at the top; this means that it is exposed to the wearing action of the highly abrasive material being sifted. In addition, there is the danger that fines from the material being sifted can get into the attachment area, where they can interfere with the removal of the sieve bed. Finally, both the installation and removal of the previously known sieve bed are relatively cumbersome because the mounting pins must be completely removed and then reinstalled each time the sieve elements are replaced.

Another example of the latter type of sifting machine is disclosed in U. S. Patent No. 5,049,262 issued to Galton et al. The Galton device consists of a deck frame made up of a series of rigid elongate members spaced apart in parallel relationship and interconnected at regular intervals by cross members. The elongate frame members each include a series of mounting apertures that are spaced apart along each member and oriented normal to the plane of the elongate member for positioning and removably connecting screening modules to the frame. Lock pins are inserted into the mounting apertures so that a top portion of the lock pin extends upwardly from the elongate frame members. Recesses in the edges of the respective screening modules receive the upper portion of these lock pins therein for the purpose of securing the screen modules to the frame. The recesses in at least one embodiment of the screening modules of the Galton patent are constructed and arranged so that the upper portion of the lock pins are wholly encompassed within and between respective screening modules placed over a lock pin. In this embodiment, no portion of the lock pin extends to or above the upper surface of the screening modules.

Some of the disadvantages that this design suffers from include the fact that given that the lock pins described in the Galton patent must be received within an aperture formed through a substantially horizontal surface of the elongate frame members, the frame members are constrained to be at least as wide as the widest portion of the lock pins themselves. The relatively large surface area of the elongate frame members reduces the useful area of the screening modules in the assembled sifting machine and thereby decreases the magnitude of the material throughput of the sifting machine. What is more, because the lock pins of the Galton patent must be made from an elastic material in order to insert the lock pins into the mounting apertures in the elongate frame members, the hold down force that the lock pins may exert upon the screening modules is necessarily limited, thereby increasing the likelihood that the screening modules will become dislodged under heavy loading conditions.

A screening panel attachment system for a sifting machine is disclosed in U. S. Patent No. 5.361,911 issued to Waites, Sr. et al. The known system comprises a device for removably attaching screening panels to the frame of a vibrating screen mechanism. The device has an elongate locking strip that is attached to the support frame of the mechanism. An elongate projection extends upwardly from the locking strip and extends lungitudinally the length of the locking strip. The projection is received by a corresponding cavity of an elongate wear pad. The edgings of the screening panels rest between the locking strip and the wear pad.

The major drawback of this known system is that the wear pads considerably reduce the active area of the screening panels. Furthermore, the wear pads are required as additional cost-intensive wearing parts for attaching the screening panels to the support structure.

A screen lining comprising a plurality of screen elements is known from EP 0 167 999 A2, being the base of the preamble of the independent claims. The screen elements of the known screen lining are attached to a support structure by means of profiles or bolts consisting of plastic material. These profiles or bolts are engaged with the support structure by a snap-in technique, thereby making use of the elastic properties of the of the plastic material the profiles or bolts are made from.

In general, wherein elastic protrusions, projections, or lock pins are utilized to secure a sieve element, screening panel, or screening module to a support frame of a sifting machine, the hold down force that may be asserted in these screening elements is necessarily limited. And, as the screening elements themselves are relatively elastic, impact forces imparted thereto by materials being dropped or otherwise placed on the sifting machine are transmitted directly to the mechanisms which secure the screening panels to the support frame of the sifting machine.

These impact forces can readily dislodge screening elements not securely attached to the support frame, thereby requiring a user to suspend operation of the sieve machine while the screen panel is replaced. Where a screen panel becomes dislodged during operation, the particulate matter being sifted may also cause undue wear on the screen panels and on the support frame.

In order to reduce the likelihood of a panel becoming dislodged during operation, relatively thin and elastic screening panels have been used. While these thinner screening panels would be subject to relatively higher deflections, their elastic nature would reduce the magnitude of the forces imparted to the mechanisms used to secure the panels to the sub-frame. The use of relatively thin screening panels has in turn resulted in shorter useful lives for the screening elements themselves because the abrasive nature of the materials being screened or sifted tends to wear out the relatively thinner panels at an unacceptably fast rate.

Prior art sifting machines also often fail to maximize the useful area of the screening elements or modules. The term "useful area" is used herein to indicate the total area of the screening surface that may pass therethrough particulate material that is being sifted. Generally speaking, a larger useful area equates with a larger total throughput of particulate materials. This in turn results in higher efficiencies and a greater return on a user's investment. Unfortunately, prior art devices that make an effort to maximize the useful area of the screening surface tend to become rather complicated and comprise a great many parts that may be susceptible to undue wear and tear themselves.

Accordingly, it is a problem of the present invention to provide a retaining mechanism for retaining a plurality of sieve elements on a support frame that maximizes the useful area of a sieve bed and provides a strong point of attachment for the sieve elements. The present invention also provides for a substantially rigid retaining mechanism that is resistant to wear and easily installed and replaced if necessary. Another problem of the present invention is to provide a retaining mechanism that increases the strength of the connection between the sub-frame of the sieve bed and the sieve elements and that permits the relative strength and thickness of a sieve element to be increased above what is normally considered useful in the prior art. It is a final problem of the present invention to provide a sieve element that will prevent fines and other particulate material from gaining access to the retaining mechanism used to secure the sieve elements to a support frame.

As a solution for these problems, the invention proposes a support frame for a sieve bed according to claim 1 and a sifting machine according to claim 7. Claim 14 relates to a sieve element for a sifting machine according to the invention. The further claims relate to preferred embodiments of the invention.

In the sieve bed according to the invention, the receptacle for the head of the mounting pin is closed off at the top, so that the head of the mounting pin cannot be worn down. Instead, the head is In a protected state underneath the top surface of the sieve elements, the edges of which are arranged in abutting fashion. Because the receptacle for the mounting pin has an opening at the bottom for the head of the mounting pin, the sieve elements, which consist of elastic material, can be easily pressed down from above onto the heads. Thus the bead on the wall of the receptacle will snap into the space underneath the head of the mounting pin and thus fix the sieve element in place on the mounting pin and the support frame.

Because of the way in which the sieve elements and mounting pins are designed, as explained above, it is possible to fix the sieve elements in place by pressing down on them from above and then by simply hitting them with a hammer above the mounting pins. For removal, a suitable tool is inserted into the joint between two adjacent sieve elements, and then the sieve element is pried off the heads of the mounting pins under elastic deformation of the edge of the element.

The installation and removal of the sieve elements is therefore as simple as could be imagined; even better, the mounting pins can remain on the frame which is an especially advantageous feature. To facilitate the insertion and snap-in engagement of the mounting pin in its mounting hole, it is also provided that the top edge of the head of the mounting pin is rounded or beveled.

According to the invention, the mounting pins consist of steel and are welded to the support frame. Because of the increased stability of the mounting pins, the mounting pins as well as the receptacles of the sieve elements for the heads of the mounting pins can be dimensioned much smaller than it is known in the art.

The mounting pins are advisably provided with a slot at the bottom, by means of which they can be mounted on vertical webs of the support frame before being welded to it

These slots make It extremely easy for the mounting pins to be welded in the correct position to the support frame. The use of vertical webs on the support frame is an extremely advantageous way of increasing the active sieve area around the edges of the sieve elements. This is because the vertical webs of the support frame are much narrower than the frame parts with the mounting holes provided in accordance with the preceding designs.

In accordance with the invention, the support frame for the sieve bed comprises a plurality of elongate ribs each having a thickness that is substantially smaller than its height. These thin ribs are arranged side-by-side upon a sub-frame such that the upper edges of the ribs are substantially co-planar. Each rib has a plurality of substantially rigid mounting pins secured to its upper edge for securing an array of sieve elements to the support frame in abutting juxtaposition. The mounting pins are typically spacedalong the upper edge of the ribs at between 12,7 and 35,6 cm (5 and 14 inches) on center.

The mounting pins have a frustoconical upper surface that, when received within a receptacle formed by a pair of cooperative apertures formed in adjacent edges of abutting sieve elements, secure the sieve elements to the support frame. The mounting pins are fabricated from a ferrous alloy and are secured to the ribs by welding. It is preferred to only weld the distal end of the stem of the mounting pin to the rib.

The heads of the mounting pins may be mushroom shaped and have an under surface that is preferably substantially flat. A stem is secured to and extends away from the under surface of the head in a substantially perpendicular relationship to the head. The stem may have a slot formed in its distal end that extends toward the head. This slot is constructed and arranged to receive therein the upper edge of the rib on which it is mounted and aids in locating the mounting pin on the rib. To this end, it is preferred that the slot formed in the stem of the mounting pin terminate in a substantially flat shoulder that is in a planar perpendicular orientation with respect to the axis of symmetry of the stem of the mounting pin.

The upper surface of the head of the mounting pin is preferably angled outward and downward at approximately a 45° angle from a plane perpendicular to an axis of symmetry of the head of the mounting pin. And while the undersurface of the head is preferably perpendicular to the stem, the undersurface may angle away from this orientation by between +5° and -5°.

Another embodiment of the mounting pin is stamped from a metal plate and comprises a hollow cylindrical body with an upper end and alower end. The lower end of the body has an aperture formed therethrough and the upper end of the body has depending downwardly therefrom a substantially frustoconical surface. This type of mounting pin may be secured to the upper edge of a rib by welding the mounting pin to the rib through the aperture formed in the cylindrical body of the pin.

Another aspect of the present invention is an improved sieve element. This sieve element may have a bead formed along its lateral edges such that when the sieve element is placed in abutting juxtaposition with one or more additional sieve elements, the beads on the abutting edges of the respective sieve elements contact one another to form a seal therebetween. This seal prevents particulate materials from passing between the sieve elements where they might abrade the mounting pins.
Figures 1 and 2 show a plan view and a cross section, respectively, of a sieve element of plastic;
Figure 3 shows a side view of a mounting pin of steel;
Figures 4 and 5 show a support frame with welded-on mounting pins of steel;
Figure 6 shows a mounting pin seated upon a vertical rib member of a support frame;
Figure 7 shows the mounting pin of Figure 6 and the method whereby this mounting pin secures a pair of sieve elements to a support frame ;
Figure 8 an embodiment of a mounting pin formed by stamping secured to the upper surface of a vertical rib of a support frame; and,
Figure 9 shows the mounting pin of Figure 8 and the method whereby this mounting pin secures a pair of sieve elements to a support frame.

Although the disclosure hereof is detailed and exact to enable those skilled in the art to practice the invention, the physical embodiments herein disclosed merely exemplify the invention, which may be embodied in other specific structure. While the preferred embodiment has been described, the details may be changed without departing from the invention, which is defined by the claims.

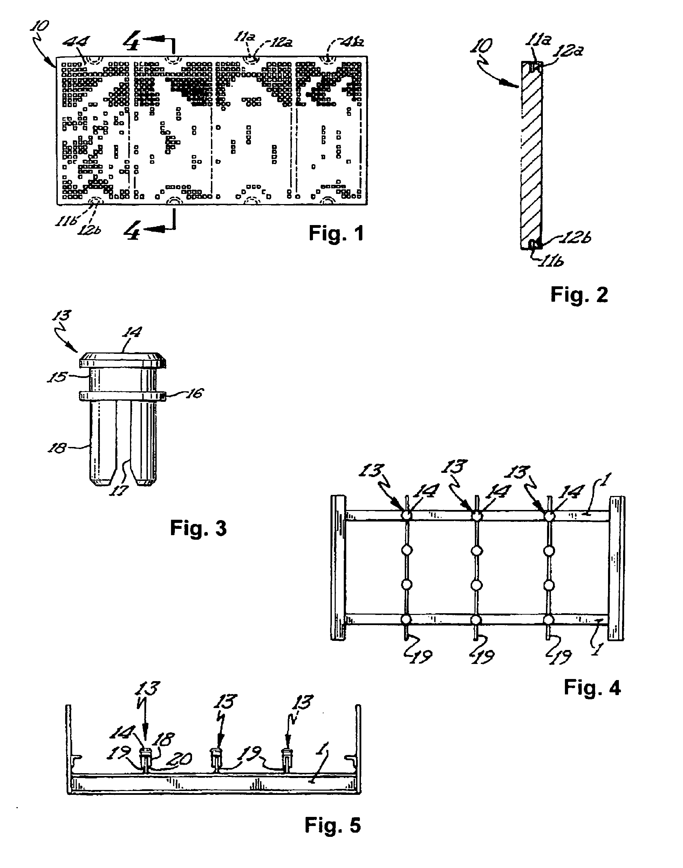

As can be derived from Figures 1 and 2, sieve elements 10 are designed as rectangular plates, which are provided over their flat expansions with a plurality of sieve openings. Along their longitudinal edges, they are provided with recesses 11a and 11 b, which work together with the corresponding recesses 11 a and 11 b of adjacent sieve elements to form receptacles 11.

The sieve elements 10 are assembled by laying them with their edges abutting each other on the support frame 1 In such a way that the recesses 11 a and 11 b come to lie above the heads of previously installed mounting pins 13. Then the sieve elements 10 are fixed in place by hitting them with a hammer above the heads 14 of the mounting pins 13. As a result, the elastic material of which the sieve elements 10 are made is elastically deformed; this allows the heads 14 to enter the receptacles 11, where they snap in place, behind a bead 12. For disassembly, a suitable tool is inserted into the joint between two, abutting sieve elements 10. With the help of this tool, the sieve elements 10 are then pried off the mounting heads 14 of the mounting pins 13 under elastic deformation of their material. Both assembly and disassembly are therefore as simple as could be imagined and can be accomplished with very simple tools.

Figure 3 shows an embodiment of a mounting pin according to the invention, which is made of steel; this pin is identified by the reference number 13. The mounting pin 13 also has a head 14, a groove 15 underneath the head, and a support shoulder 16 underneath the groove. Underneath the support shoulder 16, mounting pin 13 is designed as a cylinder 18 with a slot 17 over its entire length. This cylinder is welded to a support frame 1 for a sieve bed.

The way in which the mounting pins 13 arc welded to the support frame 1 is illustrated in Figures 4 and 5. That is, the slot in the cylindrical section 18 of the mounting pin 13 is placed from above onto vertical web 19 of the support frame 1 and fixed in place there by welds 20.

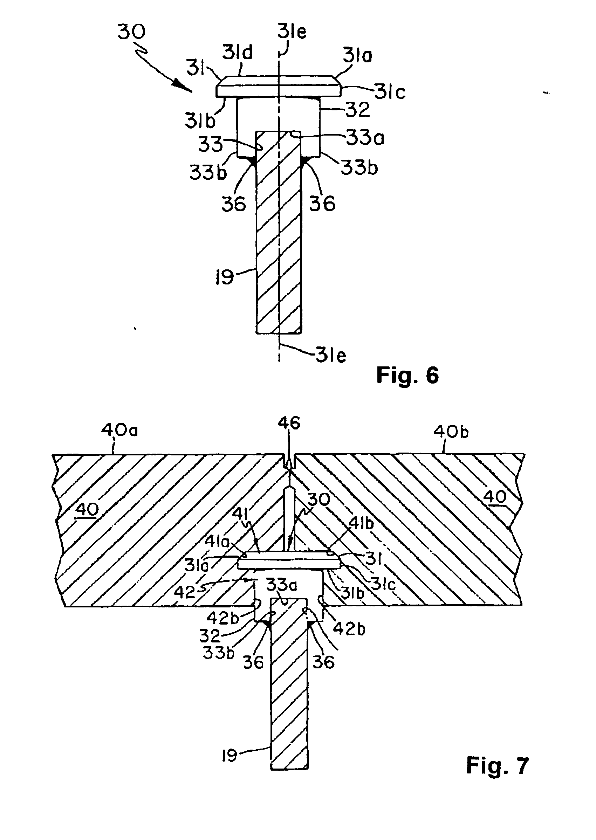

An alternate embodiment of the mounting pin 13 of Figure 3 is illustrated in Figures 6 and 7. The mounting pin of this alternative embodiment is identified by the reference numeral 30. Mounting pin 30 comprises a head 31 that is secured to a stem 32 having a slot 33 formed in its distal end.

The head 31 of the mounting pin 30 has a frustoconical upper surface 31a, which forms an angle between 45° and 60° from the axis of symmetry 31e of the head 31. Preferably, the top 31d of the head 31 is flat but may also be 31 a and 31b. Section 31c may be flat, i. e.cylindrical, or it may be radiused to form a gentle transition between head surfaces 31a and 31b. The configuration of the head 31 of mounting pin 30 is advantageous in that the amount of force necessary to insert the head 31 of the mounting pin 30 into the receptacle 41 formed between the sieve elements 40 is relatively low whereas the amount of force required to remove the sieve elements 40 from the support frame 1 is substantially higher and results in a stronger bond between the support frame 1 and the sieve element 40. This stronger bond in turn reduces the likelihood that a sieve element 40 will unnecessarily become dislodged from the support frame 1.

The mounting pin 30 is fashioned of steel or another alloy that can easily be secured, as by welding, to the vertical ribs 19 that form the support frame 1 of this embodiment. However, it is contemplated that other materials may be used in fashioning the head 31 of the mounting pin 30 so long as the head 31 remains substantially rigid. By way of example, the head 31 of the mounting pin 30 may be coated or clad with a layer of a ceramic material, a plastic material such as Teflon, or even plated. Alternatively, the head 31 may be fashioned completely from a ceramic material and secured to the stem 32. Preferably, the head 31 will be case hardened, as by carburizing, to increase the strength and abrasion resisting capabilities of the head 31.

The stem 32 extends away from the head 31, preferably in a normal relationship to the head 31. The stem 31 is narrower in cross-section than the head 31 and has a slot 33 formed in the distal end of the stem 32 opposite the head 31 of the mounting pin 30. The slot 33 extends from the distal end of the stem 32 along the stem 32 in the direction of the head 31, thereby forming a pair of legs 33b. The slot 33 terminates in a shoulder 33a that is preferably formed in a perpendicular planar relationship with the axis of symmetry 31 c of the mounting pin 30. The slot 33 is sized to receive therein the upper edge of a vertical rib 19, with the legs of the stem 32 extending down each side of the rib 19. The flat shoulder 33a acts to properly orient the head 31 of the mounting pin above the upper edge of the vertical rib 19.

The mounting pin 30 is secured to the rib 19 by welding only the distal ends of the logs 33b to the respective sides of the rib 19, though the welds could extend up the legs 33b if need be. The stem 32 and slot 33 are to be sufficiently long that the weld 36 will be spaced apart from the upper edge of the vertical rib 19 to an extent that will prevent the welds from deforming the upper edge of the rib 19 or damaging the hardened head 31 of the mounting pin 30. Sizing the stem 32 and slot 33 relatively long also advantageously allows a damaged mounting pin 30 to be cut or ground off of the rib 19 and replaced without damaging or deforming the upper surface of the rib 19.

It is preferable to form the mounting pin 30 as a unitary structure of a suitable steel. This allows the mounting pin 30 to be welded to a support frame. As indicated above, it is also contemplated that the head 31 and stem 32 may be fabricated from different materials. For example, the stem may be fabricated from steel whereas the head 31 is a ceramic material joined to the stem 32 by an adhesive or by a mechanical fastener.

Referring again to Figures 6 and 7, it can be seen that the vertical ribs 19 have a width that is thinner than the maximum width of the mounting pins 30. The relatively thin vertical ribs 19 maximize the throughput of the sieve bed by reducing the resistance to flow, i. e., the ribs 19 do not block the flow of particulate materials through the sieve elements 40 of the sieve bed. The ribs 19 are typically arranged in a side by side arrangement over a sub-frame to form the support frame 1 to which the sieve elements 40 are secured. Though the ribs 19 are thin, their depth may be varied to increase or decrease the maximum load capacities of the sifting machine.

The vertical ribs 19 are preferably installed so that their upper edges are coplanar with each other. This ensures that the upper surface of the sieve elements 40 will be substantially flat In addition, the top edges of the vertical ribs are preferably flat and perpendicular to the sides of the rib 19 to properly position the mounting pins 30 thereon.

The vertical ribs 19 are preferably welded to the sub-frame to form the support frame 1, but may also be bolted, screwed, or otherwise secured to the subframe of the sieve bed. The mounting pins 30 are secured to the upper edge of the vertical ribs 19 at between 5" (12,7 cm) and 14" (35,6 cm) on center. In practice, the vertical ribs 19 may be installed on a sub-frame to form the support frame 1 before the mounting pins 30 are secured to the ribs 19. However, it is preferred to secure the mounting pins 30 to the vertical ribs 19 before the vertical ribs 19 are installed on the sub-frame to form the support frame 1. If one or more of the mounting pins 30 should become worn or damaged, these mounting pins 30 may be individually cut off and replaced, or the entire section of vertical rib 19 having the damaged mounting pins 30 thereon may be removed and replaced with another section of vertical rib 19 and mounting pins 30. The vertical rib 19 with the damaged mounting pins 30 may then be repaired at leisure without incurring large amounts of downtime for the sifting operation.

Figure 7 illustrates adjacent and abutting sieve elements 40a and 40b held in place over the support frame 1 by a mounting pin 30 that is secured to a vertical rib 19 of support frame 1. The sieve elements 40a and 40b are provided on their abutting edges with corresponding recesses 41a and 41b which work together to form a receptacle 41 having a shape that is complimentary to the shape of the head 31 of the mounting pin 30. As can be readily understood, the head 31 of the mounting pin 30 is received in the receptacle 41 formed between the sieve elements 40a and 40b in an interlocking manner. The height of the receptacle 41 is to be no greater than the height of the head 31 of the mounting pin 30. Matching the heights of the receptacle 41 to the height of the head 31 of the mounting pin 30 results in a tight engagement between the receptacle 41 and the head of the mounting pin 30.

Preferably, the height of the receptacle 41 will be slightly smaller than that of the head 31 so as to create what can be described as a press-fit between the head of the mounting pin 30 and the receptacle 41.

Receptacle 41 is closed off at its top and has an entrance or opening at its bottom so that the head 31 of the mounting pin 30 may be inserted into the receptade 41. It should be noted that the diameter of the opening of the receptacle 41 is smaller than that of the head 31. This smaller opening is formed by a circumferential bead 42 that consists of two bead sections 42a and 42b that project inwardly from the wall of the receptacle 41. The bead 42 of the receptacle 41 closely engages the undersurface 31 b of the head 31 to hold the sieve elements 40a and 40b in place upon the support frame 1. In inserting the head 31 of the mounting pin 30 into the receptacle 40, the frustoconical upper surface 31 a of the mounting pin 30 will deflect the bead 42, thereby allowing the head 31 of the pin 30 to enter. Increasing the angle of the upper surface 31a eases the entry of the head 31 into the receptacle 42 and conversely, flattening the angle of surface 31 a tends to make the insertion more difficult. Similarly, angling the undersurface 31b of the head 31 upward will present a frustoconical surface to the entrance of the receptacle 41 and will ease the egress of the head 31 from the receptacle 41.

However, it is preferred to form the undersurface 31b perpendicular to the axis of symmetry 31e of the mounting pin 30 so as to increase the magnitude of the force required to remove the head 31 of the mounting pin from the receptacle 41. In addition, it may be desirable to form cylindrical section 31c so that it runs parallel to the axis of symmetry 31e. The resulting relatively sharp edge between the undersurface 31b of the head 31 and section 31c would also increase the magnitude of force required to remove the sieve elements 40 from the mounting pins 30.

The sieve elements 40a and 40b are assembled by laying them with their respective edges abutting each other above the support frame 1 in such way that the recesses 41a and 41b come to lie above the heads 31 of the previously installed mounting pins 30. The sieve elements 40a and 40b are then fixed in place by forcing them down on to the mounting pins 30 as by striking them with a hammer. As a result, the material of which the sieve elements 40a and 40b are made do elastically deform to allow the heads 31 of the mounting pins 30 to enter the receptacles 41 which snap in place below the beveled undersurface 31 b of the mounting pins 30.

For disassembly, a suitable tool is inserted into the joint between the two abutting sieve elements 40a, 40b, and with the help of this tool, the sieve elements 40a, 40b are then pried off the mounting heads 31 of the pins 30 under the elastic deformation of the material of the sieve elements 40a. 40b.

Because the diameters of the mounting pins 30 are relatively small, very little useful area Is lost. The only useful area that is lost is due to the lands 44 that define the upper surface of the portion of the sieve element 40 where the receptacle 41 is located in the sieve element. See Figure 1. Specifically, the diameter of the receptacle half 41 a or 41 b expressed on the upper surface of the sieve element 40 as lands 44 arc at most twice the diameter of the head 31 of the mounting pin 30 received within the receptacle 41. The small amount of lost surface area 44 results in the maximum amount of useful area for the sifting machine and hence, the maximum throughput for particulate materials. Another benefit to the small amount of lost surface area is that it is possible to utilize more mounting pins 30 in a given application, without needlessly sacrificing useful area. In a rigorous setting more mounting pins 30 may be used to secure the sieve elements 40 to the support frame 1, thereby decreasing the likelihood that a sieve element 40 may become dislodged during use. Conversely, because of the high forces necessary to dislodge the sieve elements 40 from the mounting pins 30, and because the mounting pins 30 incur very little lost surface area, a sifting machine may be designed that maximizes both throughput of particulate materials and the weight capacity of the sifting machine without having to sacrifice the former for the latter.

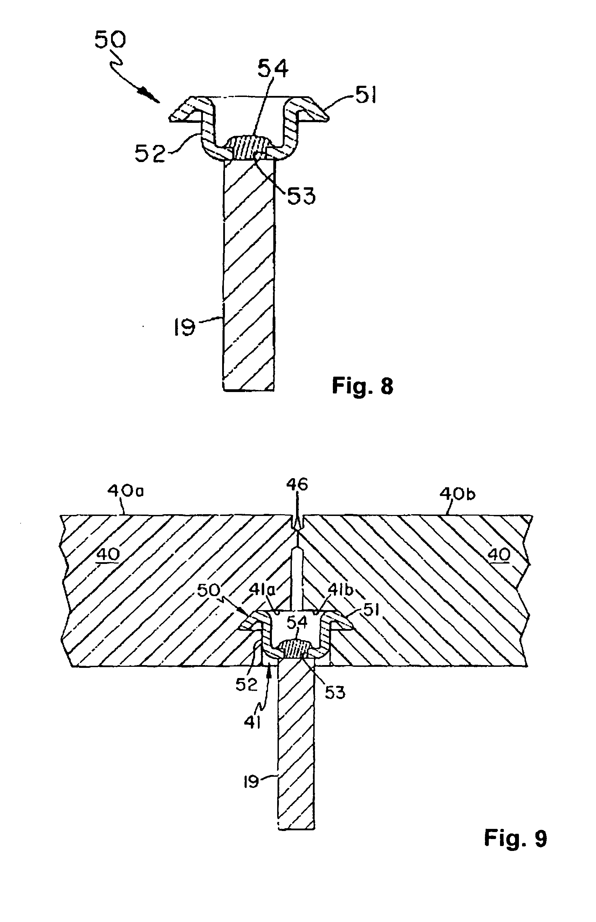

To increase the useful life of the sieve elements 40 and mounting pins 30, it is also desirable to form a seal or lip 46 around the periphery of each sieve element 40 as illustrated in Figures 7 or 9. The respective seals 46 on abutting sieve elements 40 form a barrier to particulate materials and fines that might otherwise insinuate themselves into the joint between the respective panels or Into the receptacles 41 In which the heads 31 of the mounting pins 30 are received. When particulates or fines fill the joints between the panels or infiltrate the receptacles 41, the mounting pins' ability to secure the sieve panels 40 to the support frame 1 may be compromised, thereby resulting in the inadvertent dislodgement of a sieve panel. While this cannot in all instances be prevented by including a seal 46 at the edge of the panels, the likelihood of inadvertent dislodgement of a sieve panel can be greatly reduced.

Yet another embodiment of a mounting pin constructed and arranged according to the principes of the present invention is illustrated in Figures 8 and 9.

Mounting pin 50 shown in Figure 8 is similar to mounting pin 30 illustrated in Figure 6. Mounting pin 50 omits the stem 32 of the mounting pin 30 and the lower beveled surface 31b of the head 31 of mounting pin 30. Preferably, the mounting pin 50 is fabricated from steel using a stamping process. Mounting pin 50 has an upper frustoconical surface 51, which extends downwardly from a cylindrical body 52 at an angle of approximately 45°. A cylindrical bore or hole 53 is formed through the bottom of the cylindrical body 52. The mounting pin 50 is secured to the support structure 1 using well-known plug welding techniques. As can be seen in Figure 8. a mounting pin 50 is placed in a predetermined position and attitude in contact with the upper surface of the vertical member 19 of the support frame 1. A weld material 54 suitable for use with the material from which the mounting pin 50 fabricated is heated to melting and inserted into the hole 53. The molten weld material 54 fuses the mounting pin 50 to the upper surface of the vertical web 19 of the support frame 1.

Given the similarity in the profiles of the heads of the respective mounting pins 30 and 50, it is possible to utilize sieve elements 40A and 40B having recesses 41 A and 41 B as illustrated in Figure 7 with both mounting pins 30 and 50. See Figure 9. Alternatively, sieve elements having recesses that correspond more closely to the profile of the mounting pin 50 may be provided. The sieve elements used in conjunction with mounting pin 50 are secured to and removed from the mounting pin 50 in the same manner as described above in connection with mounting pin 30.

The embodiments disclosed in this application are to be considered in all respects as illustrative and not restrictive. The scope of the invention is indicated by the appended claims rather than by the foregoing description and all changes, which come within the meaning and range of equivalency of the claims, are intended to be embraced therein.

## Claims

1. A support frame for a sieve bed comprising:
a plurality of elongate ribs (19) each having a thickness substantially smaller than its height, the ribs (19) being arranged side-by-side upon a sub-frame such that the upper edges of the ribs (19) are substantially co-planar; and
each rib (19) being further provided with a plurality of substantially rigid mounting pins (30, 50) secured to the upper edge of each rib (19) so as to secure to the support frame an array of sieve elements (40) arranged in abutting juxtaposition,
the mounting pins (30, 50) further comprising a frustoconical upper surface (31 a) arranged and constructed to be received within a receptacle (41) formed by a pair of cooperative apertures (41a, 41b) formed in adjacent edges of abutting sieve elements (40a, 40b),
the receptacles (41) for the mounting pins (30, 50) being closed off at the top,
**characterized in that** the mounting pins (30, 50) and ribs (19) are fabricated from a ferrous alloy and the mounting pins (30, 50) are secured to the ribs (19) as by welding.

2. The support frame for a sieve bed of claim 1, **characterized in that** the mounting pins (30) further comprise a mushroom shaped head (31) having a frustoconical upper surface (31 a) and a substantially flat under surface (31 b) and a stem (32) extending away from the under surface (31 b) of the head (31) in substantial perpendicular relationship to the head (31), the stem (32) having a slot (33) formed therein that extends from a distal end of the stem toward the head (31), the slot (33) being constructed and arranged such that the upper edge of a rib (19) may be received therein for purposes of locating the mounting pin (30) on the rib.

3. The support frame for a sieve bed of claim 2, **characterized in that** the diameter of the heads (31) of the mounting pins (30) are wider than the width of the ribs (19).

4. The support frame for a sieve bed of claim 2, **characterized in that** the slot (33) formed in the stem (32) in the mounting pin (30) terminates in a substantially flat shoulder (33a) that is in a planar perpendicular orientation with respect to an axis of symmetry (31 e) of the stem (32) of the mounting pin (30).

5. The support frame for a sieve bed of claim 1, **characterized in that** the mounting pin (50) is stamped from a metal plate and comprises a hollow cylindrical body having an upper end and a lower end (52), the lower end (52) of the body having an aperture (53) formed there through and the upper end of the body having depending downwardly therefrom a substantial frustoconical surface (51).

6. The support frame for a sieve bed of claim 5, **characterized in that** the mounting pin (50) is secured to the upper edge of a rib (19) by welding the mounting pin (50) through the aperture (53) formed in the cylindrical body of the pin (50).

7. A sifting machine comprising:
a subframe;
a support frame (1) that rests on, and is secured to, the subframe, the support frame (1) comprising a plurality of elongate thin ribs (19) having upper edges arranged in a substantially coplanar relationship;
each of the ribs (19) being further provided with a plurality of mounting pins (13), each mounting pin comprising a mushroom shaped head (14) having a frustoconical upper surface and a stem (18) secured to an under surface of the head (14) and extending away from the head (14), the stem (18) having a distal end into which is formed a slot (17), the slot (17) extending from the distal and of the stem (18) toward the head (14) and terminating at some predetermined distance from the head (14); and
an array of sieve elements (10) arranged in abutting juxtaposition and secured to the support frame (1) by the mounting pins (13), the head (14) of each mounting pin engaging a pair of adjacent recesses (11a, 11b), each recess (11a, 11 b) being formed in the respective edges of abutting sieve elements (10a, 10b) and wherein the pair of adjacent recesses (11a, 11b) work together to form a receptacle (11) complementary to the shape of the head (14) of the mounting pin (13), the receptacle (11) for the head (14) of the mounting pins (13) being closed off at the top,
**characterized in that** the mounting pins (13) are seated upon the ribs (19) such that the upper edges of the ribs (19) are received within the slot (17) of the mounting pins (13), wherein the mounting pins (13) and ribs (19) are fabricated from a ferrous alloy and the mounting pins (13) are secured to the ribs (19) as by welding.

8. The sifting machine of claim 7, **characterized in that** the recesses (11a, 11b) formed in the edge of the sieve elements (10a, 10b) have a vertical dimension that is less than the vertical height of the head (14) of a mounting pin (13) so that when the head (14) of the mounting pin (13) is received in the receptacle (11) formed by the recesses (11 a, 11 b), the material of the sieve elements (10a, 10b) surrounding the recesses (11a, 11b) will exert a force upon the head (14) of the mounting pin (13).

9. The sifting machine of claim 7, **characterized in that** the heads (14) of the mounting pins (13) further comprise:
an upper surface that angles outward and downward at approximately a 45° angle from a plane perpendicular to an axis of symmetry of the head (14) of the mounting pin (13); and
an undersurface that angles away from a plane perpendicular to an axis of symmetry of the stem of the mounting pin by between +5° and -5°.

10. The sifting machine of claim 9, **characterized in that** the mounting pin (13) is received over the rib (19) and is secured to the rib by welding only the distal end of the stem (18) to the respective sides of the rib (19).

11. The sifting machine of claim 7, **characterized in that** the mounting pins (13) are spaced between 12,7 cm and 35,6 cm (5 and 14 inches) on center along the respective ribs (19).

12. The sifting machine of claim 7, **characterized in that** the area of the sieve element (10) immediately adjacent each recess (11) formed in the edge of the sieve element (10) is substantially free of perforations and has a diameter that is less than twice the diameter of the head (14) of the mounting pin (13).

13. The sifting machine of claim 7, **characterized in that** the sieve elements (10) further comprise a bead formed along their lateral edges such that when the sieve elements (10) are installed in abutting juxtaposition, the beads on the abutting edges of respective sieve elements (10) will contact one another to form a seal therebetween.

14. A sieve element for sifting particulate materials in a sifting machine according to claim 7, comprising:
a panel having a plurality of lateral edges defining a sifting surface of the panel;
a plurality of sieve openings of predetermined size formed through the sifting surface of the panel; and
a plurality of receptacles (11a, 11b) formed in the lateral edges of the panel, the receptacles (11a, 11b) being constructed and arranged to receive therein a mechanism for securing the sieve element (10) to a support frame (1) of a sifting machine,
wherein the receptacles (11 a, 11 b) are further constructed and arranged such that an area of the sifting surface corresponding to the location of a respective receptacle (11a, 11b) has a diameter that is less than twice the diameter of the receptacle (11a, 11b) itself.

15. The sieve element of claim 14, **characterized by** a bead (46) formed along the lateral edges of the sieve element (10, 40) such that when the sieve element (10, 40) is placed in abutting juxtaposition with one or more additional sieve elements (10, 40), the beads (46) on the abutting edges of the respective sieve elements (10, 40) will contact one another to form a seal therebetween to prevent the flow of particulate materials therebetween.

## Patentansprüche

1. Tragrahmen für einen Siebboden, mit einer Mehrzahl von länglichen Stegen (19), deren Stärke jeweils wesentlich kleiner ist als deren Höhe, wobei die Stege (19) nebeneinander auf einem Unterbau angeordnet sind, so dass die Oberkanten der Stege (19) im Wesentlichen koplanar sind, wobei jeder Steg (19) außerdem eine Mehrzahl von im Wesentlichen starren Befestigungszapfen (30, 50) aufweist, die an der Oberkante jedes Steges (19) angeordnet sind, um an dem Tragrahmen eine Anzahl von Siebelementen (40) festzulegen, die aneinander grenzend nebeneinander angeordnet sind, wobei die Befestigungszapfen (30, 50) außerdem eine kegelstumpfförmige Oberseite (31a) haben, die so angeordnet und ausgelegt ist, dass sie in einen Aufnahmeraum (41) eingreift, der durch zusammenwirkende Ausnehmungen (41a, 41b) an den Kanten von aneinander grenzenden Siebelementen (40a, 40b) gebildet wird, wobei die Aufnahmeräume (41) für die Befestigungszapfen (30, 50) oben geschlossen sind,
**dadurch gekennzeichnet, dass** die Befestigungszapfen (30, 50) und die Stege (19) aus einer eisenhaltigen Legierung hergestellt sind, wobei die Befestigungszapfen (30, 50) an den Stegen (19) durch Schweißen befestigt sind.

2. Tragrahmen für einen Siebboden nach Anspruch 1, **dadurch gekennzeichnet, dass** die Befestigungszapfen (30) außerdem einen pilzförmigen Kopf (31) mit einer kegelstumpfförmigen Oberseite (31 a) und einer im Wesentlichen flachen Unterseite (31 b) aufweisen, wobei sich ein Schaft (32) von der Unterseite (31 b) des Kopfes (31) aus im Wesentlichen senkrecht zum Kopf (31) erstreckt, wobei in dem Schaft (32) ein Schlitz (33) ausgebildet ist, der sich vom Distalende des Schaftes (32) zum Kopf (31) hin erstreckt, wobei der Schlitz (33) so angeordnet und ausgelegt ist, dass darin die Oberkante eines Stegs (19) aufnehmbar ist, um den Befestigungszapfen (30) an dem Steg (19) zu fixieren.

3. Tragrahmen für einen Siebboden nach Anspruch 2, **dadurch gekennzeichnet, dass** der Durchmesser des Kopfes (31) der Befestigungszapfen (30) größer ist als die Breite der Stege (19).

4. Tragrahmen für einen Siebboden nach Anspruch 2, **dadurch gekennzeichnet, dass** der im Schaft (32) des Befestigungszapfens (30) ausgebildete Schlitz (33) in einer im Wesentlichen flachen Schulter (33a) endet, deren Ebene senkrecht zur Symmetrieachse (31 e) des Schafts (32) des Befestigungszapfens (30) ausgerichtet ist.

5. Tragrahmen für einen Siebboden nach Anspruch 1, **dadurch gekennzeichnet, dass** der Befestigungszapfen (50) aus einer Metallplatte gestanzt ist und einen hohlzylindrischen Körper mit einer Oberseite und einer Unterseite (52) aufweist, wobei an der Unterseite (52) des Körpers eine durchgehende Öffnung (53) ausgebildet ist und wobei an der Oberseite eine von dem Körper herabhängende, im Wesentlichen kegelstumpfförmige Oberfläche (51) ausgebildet ist.

6. Tragrahmen für einen Siebboden nach Anspruch 5, **dadurch gekennzeichnet, dass** der Befestigungszapfen (50) an der Oberkante eines Stegs (19) durch Verschweißen durch die Öffnung (53) des zylindrischen Körpers des Zapfens (50) befestigt ist.

7. Siebmaschine mit einem Unterbau, einem Tragrahmen (1), der auf dem Unterbau aufliegt und an diesem befestigt ist, wobei der Tragrahmen (1) eine Mehrzahl von länglichen dünnen Stegen (19) aufweist, deren Oberkanten im Wesentlich koplanar angeordnet sind, wobei jeder der Stege (19) eine Mehrzahl von Befestigungszapfen (13) aufweist, wobei jeder Befestigungszapfen (13) einen pilzförmigen Kopf (14) mit einer kegelstumpfförmigen Oberseite und einen an der Unterseite des Kopfes (14) befestigten und sich vom Kopf (14) weg erstreckenden Schaft (18) aufweist, wobei in dem Distalende des Schafts (18) ein Schlitz (17) ausgebildet ist, der sich vom Distalende des Schafts (18) zum Kopf (14) erstreckt und bei einem vorbestimmten Abstand vom Kopf (14) endet, und wobei eine Anzahl von Siebelementen (10) aneinander grenzend nebeneinander an dem Tragrahmen (1) durch die Befestigungszapfen (13) befestigt sind, wobei der Kopf (14) jedes Befestigungszapfens in ein Paar aneinander grenzende Ausnehmungen (11a, 11b) eingreift, wobei jede Ausnehmung (11a, 11 b) in den jeweiligen Kanten von aneinander grenzenden Siebelementen (10a, 10b) ausgebildet ist und wobei das Paar aneinander grenzender Ausnehmungen (11a, 11 b) zusammenwirken und einen Aufnahmeraum (11) bilden, der komplementär zur Form des Kopfes (14) des Befestigungszapfens (13) ausgebildet ist, wobei der Aufnahmeraum (11) für den Kopf (14) des Befestigungszapfens (13) oben geschlossen ist,
**dadurch gekennzeichnet, dass** die Befestigungszapfen (13) auf den Stegen (19) sitzen, und zwar so, dass die Oberkanten der Stege (19) in den Schlitzen (17) der Befestigungszapfen (13) aufgenommen sind, wobei die Befestigungszapfen (13) und die Stege (19) aus einer eisenhaltigen Legierung hergestellt sind und wobei die Befestigungszapfen (13) an den Stegen (19) durch Schweißen befestigt sind.

8. Siebmaschine nach Anspruch 7, **dadurch gekennzeichnet, dass** die Ausnehmungen (11a, 11b), die in den Kanten der Siebelemente (10a, 10b) ausgebildet sind, eine vertikale Abmessung haben, die geringer ist als die vertikale Höhe des Kopfes (14) des Befestigungszapfens (13), so dass das Material der Siebelemente (10a, 10b), das die Ausnehmungen (11a, 11 b) umgibt, eine Kraft auf den Kopf (14) des Befestigungszapfens (13) ausübt, wenn der Kopf (14) des Befestigungszapfens (13) in den durch die Ausnehmungen (11 a, 11 b) gebildeten Aufnahmeraum (11) eingreift.

9. Siebmaschine nach Anspruch 7, **dadurch gekennzeichnet, dass** die Köpfe (14) der Befestigungszapfen (13) außerdem an der Oberseite eine Oberfläche aufweisen, die nach außen und unten unter einem Winkel von ungefähr 45° ausgehend von einer Ebene senkrecht zur Symmetrieachse des Kopfes (14) des Befestigungszapfens (13) verlaufen, sowie eine Unterseite, die von einer Ebene senkrecht zur Symmetrieachse des Schafts des Befestigungszapfens aus unter einem Winkel von +5° bis -5° verläuft.

10. Siebmaschine nach Anspruch 9, **dadurch gekennzeichnet, dass** der Befestigungszapfen (13) auf den Steg (19) aufgesetzt ist und an dem Steg befestigt ist, indem nur das Distalende des Schafts (18) mit den jeweiligen Seiten des Stegs (19) verschweißt ist.

11. Siebmaschine nach Anspruch 7, **dadurch gekennzeichnet, dass** die Befestigungszapfen (13) entlang der jeweiligen Stege (19) mit einem Abstand der Mittelachsen von 12,7 cm bis 35,6 cm (5 bis 14 Zoll) angeordnet sind.

12. Siebmaschine nach Anspruch 7, **dadurch gekennzeichnet, dass** die Fläche des Siebelements (10) unmittelbar angrenzend an jede in der Kante des Siebelements (10) ausgebildete Ausnehmung (11) im Wesentlichen frei von einer Perforation ist und einen Durchmesser hat, der kleiner ist als das Doppelte des Durchmessers des Kopfes (14) des Befestigungszapfens (13).

13. Siebmaschine nach Anspruch 7, **dadurch gekennzeichnet, dass** die Siebelemente (10) außerdem einen entlang der seitlichen Kanten ausgebildeten Wulst aufweisen, so dass die Wulste der aneinander grenzenden Kanten der jeweiligen Siebelemente (10) sich gegenseitig berühren und zwischen sich eine Dichtung ausbilden, wenn die Siebelemente (10) aneinander grenzend nebeneinander eingebaut sind.

14. Siebelement zum Sieben von Feststoffen mittels einer Siebmaschine nach Anspruch 7, mit einem Panel, das mehrere seitliche Kanten aufweist, die eine Siebfläche des Panels bilden, wobei in der Oberfläche des Panels eine Mehrzahl von Sieböffnungen vorgegebner Größe ausgebildet sind und wobei eine Mehrzahl von Aufnahmeöffnungen (11a, 11 b) in den seitlichen Kanten des Panels ausgebildet sind, die so ausgelegt und angeordnet sind, dass darin eine Einrichtung zur Befestigung des Siebelements (10) an einem Tragrahmen (1) einer Siebmaschine eingreifen kann, wobei die Aufnahmeöffnungen (11a, 11b) des Weiteren so ausgelegt und angeordnet sind, dass eine Teilfläche der Sieboberfläche im Bereich der jeweiligen Aufnahmeöffnung (11a, 11 b) einen Durchmesser hat, der weniger als zweimal so groß ist, wie der Durchmesser der Aufnahmeöffnung (11 a, 11 b) selbst.

15. Siebelement nach Anspruch 14, **gekennzeichnet durch** einen Wulst (46), der entlang der seitlichen Kante des Siebelements (10, 40) ausgebildet ist, so dass die Wulste (46) an den aneinander grenzenden Kanten der jeweiligen Siebelemente (10, 40) sich gegenseitig berühren und so zwischen sich eine Dichtung ausbilden, um den Durchfluss von Feststoffen zu verhindern, wenn die Siebelemente (10, 40) aneinander grenzend nebeneinander mit einem oder mehreren weiteren Siebelementen (10, 40) angeordnet sind.

## Revendications

1. Cadre de support pour un tamis comprenant:
plusieurs nervures oblongues (19), chacune d'une épaisseur sensiblement plus petite que son hauteur, les nervures (19) étant agencées côte-à-côte sur un sous-cadre de telle sorte que les bords supérieurs des nervures (19) sont sensiblement co-planaires; et
chaque nervure (19) présentant en outre plusieurs axes de montage (30,50) sensiblement rigides fixées au bord supérieur de chaque nervure (19) de manière à fixer au cadre de support une rangée d'éléments à tamiser (40) agencés selon une juxtaposition de butée,
les axes de montage (30,50) comprenant en outre une surface supérieure tronconique (31a) agencée et construite pour être reçue dans un logement(41) formé par deux ouvertures coopérantes (41a,41b) ménagées dans des bords adjacents d'éléments à tamiser en butée (40a,40b),
les logements (41) des axes de montage (30,50) étant fermés sur le dessus,
**caractérisé en ce que** les axes de montage (30,50) et les nervures (19) sont fabriqués à partir d'un alliage ferreux, et les axes de montage (30,50) sont fixés aux nervures (19) par soudage.

2. Cadre de support pour un tamis selon la revendication 1, **caractérisé en ce que** les axes de montage (30) comprennent en outre une tête (31) en forme de champignon présentant une surface supérieure tronconique (31a) et une surface inférieure sensiblement plate (31b) et une tige (32) s'étendant à partir de la surface inférieure (31b) de la tête (31) selon une relation sensiblement perpendiculaire à la tête (31), la tige (32) présentant une fente (33) ménagée dans celle-ci qui s'étend d'une extrémité distale de la tige vers la tête (31), la fente (33) étant construite et agencée de telle sorte que le bord supérieur d'une nervure (19) peut être reçu dans celle-ci pour localiser l'axe de montage (30) sur la nervure.

3. Cadre de support pour un tamis selon la revendication 2, **caractérisé en ce que** le diamètre des têtes (31) des axes de montage (30) sont plus larges que la largeur des nervures (19).

4. Cadre de support pour un tamis selon la revendication 2, **caractérisé en ce que** la fente (33) ménagée dans la tige (32) dans l'axe de montage (30) se termine par un épaulement sensiblement plat (33a) qui se situe dans une orientation perpendiculaire plane par rapport à un axe de symétrie (31e) de la tige (32) de l'axe de montage (30).

5. Cadre de support pour un tamis selon la revendication 1, **caractérisé en ce que** l'axe de montage (50) est découpé dans une tôle et comprend un corps cylindrique creux ayant une extrémité supérieure et une extrémité inférieure (52), l'extrémité inférieure (52) du corps ayant une ouverture (53) formée à travers celle-ci, et l'extrémité supérieure du corps présentant une surface sensiblement tronconique (51) s'étendant vers le bas à partir de celle-ci.

6. Cadre de support pour un tamis selon la revendication 5, **caractérisé en ce que** l'axe de montage (50) est fixé au bord supérieur d'une nervure (19) en soudant l'axe de montage (50) à travers l'ouverture (53) ménagée dans le corps cylindrique de l'axe (50).

7. Cribleuse comprenant:
un sous-cadre;
un cadre de support (1) qui repose sur, et est fixé au, sous-cadre, le cadre de support (1) comprenant plusieurs nervures minces oblongues (19) ayant des bords supérieurs agencés selon une relation sensiblement coplanaire;
chacune des nervures (19) présentant en outre plusieurs axes de montage (13), chaque axe de montage comprenant une tête en forme de champignon (14) ayant une surface supérieure tronconique et une tige (18) fixée à une surface inférieure de la tête (14) et s'étendant au loin de la tête (14), la tige (18) ayant une extrémité distale dans laquelle est ménagée une fente (17), la fente (17) s'étendant de l'extrémité distale de la tige (18) vers la tête (14) et se terminant à une distance prédéterminée de la tête (14); et une rangée d'éléments à tamiser (10) agencée selon une juxtaposition de butée et fixée au cadre de support (1) par les axes de montage (13), la tête (14) de chaque axe de montage s'engageant dans deux évidements adjacents (11a, 11b), chaque évidement (11a,11b) étant réalisé dans les bords respectifs d'éléments à tamiser en butée (10a,10b), et où les deux évidements adjacents (11a,11b) coopèrent pour former un logement (11) complémentaire à la forme de la tête (14) de l'axe de montage (13), le logement(11) de la tête (14) des axes de montage (13) étant fermés sur le dessus,
**caractérisé en ce que** les axes de montage (13) reposent sur les nervures (19) de telle sorte que les bords supérieurs des nervures (19) sont reçus dans la fente (17) des axes de montage (13), où les axes de montage (13) et les nervures (19) sont fabriquées à partir d'un alliage ferreux, et les axes de montage (13) sont fixés aux nervures (19) par exemple par soudage.

8. Cribleuse selon la revendication 7, **caractérisée en ce que** les évidements (11a,11b) formés dans le bord des éléments à tamiser (10a,10b) ont une dimension verticale qui est plus petite que la hauteur verticale de la tête (14) d'un axe de montage (13) de telle sorte que lorsque la tête (14) de l'axe de montage (13) est reçue dans le logement(11) formé par les évidements (11a,11b), le matériau des éléments à tamiser (10a,10b) entourant les évidements (11a,11b) exercera une force sur la tête (14) de l'axe de montage (13).

9. Cribleuse selon la revendication 7, **caractérisée en ce que** les têtes (14) des axes de montage (13) comprennent en outre:
une surface supérieure qui s'étend selon un angle vers l'extérieur et vers le bas selon un angle d'environ 45° à partir d'un plan perpendiculaire à un axe de symétrie de la tête (14) de l'axe de montage (13); et
une surface inférieure qui s'étend selon un angle au loin d'un plan perpendiculaire à un axe de symétrie de la tige de l'axe de montage qui est compris entre +5° et -5°.

10. Cribleuse selon la revendication 9, **caractérisée en ce que** l'axe de montage (13) est reçu sur la nervure (19) et est fixé à la nervure en soudant seulement l'extrémité distale de la tige (18) aux côtés respectifs de la nervure (19).

11. Cribleuse selon la revendication 7, **caractérisée en ce que** les axes de montage (13) sont espacés entre 12,7 cm et 35,6 cm (5 et 14 pouces) sur le centre le long des nervures respectives (19).

12. Cribleuse selon la revendication 7, **caractérisée en ce que** la zone de l'élément à tamiser (10) directement adjacente à chaque évidement (11) formé dans le bord de l'élément à tamiser (10) est sensiblement exempte de perforations et présente un diamètre qui est plus petit que deux fois le diamètre de la tête (14) de l'axe de montage (13).

13. Cribleuse selon la revendication 7, **caractérisée en ce que** les éléments à tamiser (10) comprennent en outre un bourrelet formé le long de leurs bords latéraux de telle sorte que lorsque les éléments à tamiser (10) sont installés selon une juxtaposition de butée, les bourrelets des bords en butée des éléments à tamiser respectifs (10) viendront en contact les uns avec les autres pour former un joint entre eux.

14. Elément à tamiser pour tamiser des matières particulaires dans une cribleuse selon la revendication 7, comprenant:
un panneau ayant plusieurs bords latéraux définissant une surface de criblage du panneau;
plusieurs ouvertures de tamis d'une taille prédéterminée formées dans la surface de criblage du panneau; et
plusieurs logements (11a,11b) formés dans les bords latéraux du panneau, les logements (11a, 11b) étant construits et agencés pour recevoir dans ceux-ci un mécanisme pour fixer l'élément à tamiser (10) à un cadre de support (1) d'une cribleuse,
où les logements (11a,11b) sont construits et agencés en outre de telle sorte qu'une zone de la surface de criblage correspondant à l'emplacement d'un logement respectif (11a,11b) a un diamètre qui est plus petit que deux fois le diamètre du logement (11a, 11b) lui-même.

15. Elément à tamiser selon la revendication 14, **caractérisé par** un bourrelet (46) formé le long des bords latéraux de l'élément à tamiser (10,40) de telle sorte que, lorsque l'élément à tamiser (10,40) est placé selon une juxtaposition de butée avec un ou plusieurs éléments à tamiser additionnels (10,40), les bourrelets (46) sur les bords en butée des éléments à tamiser respectifs (10,40) viendront en contact les uns avec les autres pour former un joint entre eux pour empêcher l'écoulement des matières particulaires entre ceux-ci.
